# EUROPÄISCHE PATENTSCHRIFT

(11) **EP 2 314 971 B1**
(45) Veröffentlichungstag und Bekanntmachung des Hinweises auf die Patenterteilung: **02.03.2016**
(21) Anmeldenummer: 10013846.0
(22) Anmeldetag: 21.10.2010
(51) Int. Cl.: F28D 20/00, F28F 13/18, F28F 13/00

(54) **Wärmespeicher mit Energieeinspeisung zur langzeitstabilen und gleichmäßigen Leistungsabgabe und Verfahren hierzu**
Heat exchanger with energy feed-in for long-term stable and even power performance and method for same
Accumulateur thermique doté d'une alimentation en énergie pour un rendement de puissance stable dans le temps et régulier ainsi que son procédé

(30) Priorität: 22.10.2009 DE 102009050362; 15.12.2009 DE 102009058364
(43) Veröffentlichungstag der Anmeldung: 27.04.2011
(73) Patentinhaber: JESS GmbH, 77731 Willstadt (DE)
(72) Erfinder: Rößler, Peter, 76456 Kuppenheim (DE); Quast, Klaus, 77855 Achem (DE)
(74) Vertreter: Vonnemann, Gerhard

(56) Entgegenhaltungen:
- WO-A1-2008/135100

## Beschreibung

### Technisches Gebiet:

Die Erfindung betrifft einen Wärmespeicher mit einer Einspeiseeinrichtung für die zu speichernde Energie in Form von Wärme, zur langzeitstabilen und gleichmäßigen Leistungsabgabe, bestehend aus einem hitzebeständigen Feststoff, welcher bei Erhitzen Wärme zu speichern imstande ist, wobei zur Wärmeentnahme in den Feststoff Rohre eingebettet sind, welche zum Erhitzen und/oder Verdampfen eines die Rohre beaufschlagendes, Wärme transportierendes Medium dienen; ebenso betrifft die Erfindung ein Verfahren zur Wärmespeicherung unter Verwendung eines Wärmespeichers mit einer Einspeiseeinrichtung für die zu speichernde Energie in Form von Wärme.

Im Zusammenhang mit der Energieerzeugung aus regenerativen Energiequellen, wie z.B. Wind, Sonne und Wasserkraft, besteht das Problem, dass für die Energieerzeuger stets Backuplösungen vorgehalten werden müssen, da weder Wind noch Sonne noch Wasserkraft immer zum richtigen Zeitpunkt und in der richtigen Menge Energie liefern. Solange diese Energien nicht im großen Maßstab gepuffert werden können, müssen beim Ausfall der regenerativen Energiequellen stets die ausfallenden Energiemengen durch konventionelle Kraftwerke ersetzt werden können. Je mehr ungepufferte Energieerzeuger am Netz sind, umso größer wird das Problem, dass dadurch die konventionellen Kraftwerke zunehmend im unwirtschaftlichen Teillastbereich arbeiten müssen, nur um im Falle eines Falles bereitzustehen. Daher müssen Wege gefunden werden, Energie auch über längere Zeiträume speichern zu können. An der Lösung dieser Aufgabe arbeiten z.Zt. viele Institutionen und Firmen auf der ganzen Welt.

### Stand der Technik:

Energie kann auf vielerlei Art gespeichert werden. So kann unmittelbar elektrische Energie in Batterien gespeichert werden. Es kann potentielle Energie z.B. in Form von Wasserspeichern gespeichert werden. Es kann aber auch Wärme gespeichert werden, die bei Entnahme aus dem Speicher mittels Dampfturbinen den gewünschten Strom erzeugt. Häufig werden heute hierzu Salzspeicher verwendet. Es kann jedoch auch Wärme in Feststoffen gespeichert werden. Z.B. hat Siemens einen Feststoffspeicher auf Betonbasis entwickelt. Alle diese Lösungen haben gemeinsam, dass sie materialbedingt nur bei relativ niedrigen Temperaturen arbeiten und keinesfalls Temperaturen für den Betrieb der effizientesten Mehrstufenturbinen der heutigen Kraftwerkstechnik erreichen.

Um hohe Temperaturen erreichen zu können, sind aus dem Stand der Technik keramische Speicherblöcke bekannt, die seit langem vielerlei Verwendung finden, u.a. auch in elektrischen Nachtspeicherheizungen. Meist bestehen diese aus Schamotten, da diese langlebig sind, eine hohe Temperaturbeständigkeit und je nach Ausführung auch eine hohe Wechseltemperaturbeständigkeit aufweisen und diese positiven Eigenschaften mit niedrigen Kosten verbinden.

Durch die WO2008135100A1, die der Oberbegriffs des Anspruchs 1 zeigt, ist ein Allzweckwärmespeicher zur Speicherung verschiedener Arten von Energie, wie erneuerbare Energie, Nachtstrom sowie Stromenergie im Allgemeinen als auch Energie aus festen, gasförmigen und/oder flüssigen Brennstoffen, von Energie aus Biomasse sowie von Abfallwärme aus der Industrie, bekannt geworden, bei welchem die Energiespeicherung in Wärmespeicherblöcken erfolgt, in denen durch die Energiespeicherung erhitzbare Verdampferrohre eingebettet sind, in welche Wasser in einer vorgegebenen Menge einzutropfen imstande ist, wodurch sich in den Verdampferrohren Wasserdampf bildet, dessen Wärmeinhalt für Heizzwecke oder Sekundärenergieerzeugung nutzbar ist. Die Verdampferrohre bestehen aus Stahl, wobei das Kondensat in einem Kreislauf geführt ist. An den Verdampferrohren können Rippen aus Stahlblech oder einem anderen Werkstoff angeschweißt sein zur Unterstützung der Wärmeleitung von der Wärmespeichermasse zu den Verdampferrohren. Der entstehende Dampf kann unmittelbar zum Antrieb einer Turbine dienen.

Durch die DE 2117103A1 ist ein Verfahren zum Erzeugen eines erhitzten Mediums, wie Wasser, für Beheizungszwecke durch Anwendung elektrischer Energie bekannt geworden, bei dem ein von einer Isolation umgebener metallischer Block durch elektrische Aufheizung zu einem Wärmespeicher erhitzt und der Wärmespeicher zur Erhitzung des aufzuheizenden Wassers genutzt und dieses im Kreislauf ganz oder teilweise zum Wärmespeicher zurückgeführt wird, wobei in dem erhitzten Block Heizdampf erzeugt wird. Hierzu ist im Block wenigstens ein Kanal mit einer Spritzdüse angeordnet, über die zur Dampferzeugung Wasser in den Kanal gespritzt wird.

Durch die DE 2123493A ist ein elektrisches Heizelement mit vergrößerter Wärmespeicherung bekannt geworden, bestehend aus Rohrheizkörpern, welche von einem Wärme speichernden Medium umgeben sind, welches aus kornförmigen, metallischen oder metallkeramischen Stoffen besteht, welche die Rohrheizkörper wärmeleitend und elastisch umgeben. Diese Stoffe füllen die Hohlräume eines äußeren Speicherkörpers, in dessen Aussparungen sich die Rohrheizkörper befinden, wärmeleitend aus. In den Zwischenräumen der kornförmigen Stoffe ist ein Füllmittel aus Metall eingebracht, welches in geschmolzenem Zustand die Zwischenräume dicht und wärmeleitend ausfüllt.

Durch die DE 42 34 006 C2 ist eine Matrix für Wärmetauscher mit Profilrohren bekannt geworden, wobei die Profilrohre Kanäle aufweisen, welche jeweils von einem Innenrohr gebildet werden, welches von einem Mantel umschlossen ist. Der Mantel wird jeweils von einer äußeren Schale und einem inneren, das Innenrohr aufnehmenden Kern gebildet, wobei der Werkstoff der Innenrohre ein Metall hoher Wärmeleitfähigkeit und die Schalen Blechschalen sind. Das Innenrohr ist in einem Metallkern eingebettet, welcher von der dünnen Blechschale 6 umhüllt wird. Der Werkstoff des Kerns ist ein niedrig schmelzendes Metall oder eine Metalllegierung, dessen Schmelztemperatur unterhalb der Betriebstemperatur liegt, so dass sich der Kern bei Heißgasumströmung des Profilrohrs verflüssigt.

Ein wesentliches Problem bei der Nutzung von Festkörperspeichern besteht in der Herstellung eines Wärmespeichers, der seine aufgenommene Wärme langfristig und mit konstant und berechenbar hoher Leistung an das Überträgermedium - für den Antrieb von Dampfturbinen ist das Wasser, bzw. Sattdampf - abgeben kann. Hierzu müssen druck- und temperaturstabile Rohrleitungen in den Feststoff eingebracht werden. Die besondere Schwierigkeit dabei besteht darin, dass jedweder Luftspalt zwischen dem Feststoff und den eingebetteten Rohren dazu führt, dass die Wärmeübertragung zwischen dem Feststoff und dem Verdampferrohr auf einen Bruchteil dessen zusammenbricht, was bei einem unmittelbaren Kontakt erreicht wird. Da jeder Feststoff nach der Verarbeitung (Gießen, Kneten o.ä.) einer Schwindung unterliegt, sind solche Spalte zwischen dem eingebetteten Rohr und dem Feststoff jedoch praktisch unvermeidlich. Daraus folgt, dass die Wärmeauskopplung nur mit einem relativ schlechten Wirkungsgrad erfolgen kann. Das kann bislang wiederum nur durch das Einbringen von erheblich mehr Rohren kompensiert werden, was die Herstellung eines solchen Speichers erheblich verteuert und die Raumökonomie verschlechtert, da mit jedem zusätzlich eingebrachten Rohr die Speichermasse pro Raumeinheit des Speichers sinkt. Zudem erfordert der ungleichmäßige und nicht beherrschbare Kontakt zwischen Rohr und Feststoff eine komplizierte Regeltechnik um diese Unterschiede regeltechnisch ausgleichen zu können. Je kleiner die Einheit ist, umso schädlicher sind diese Einflüsse.

Des Weiteren soll der Speicherwerkstoff das langzeitstabile Speichern von Wärme bei sehr hohen Temperaturen von ggfs. > 1.000°C ermöglichen. Problematisch ist bei derartigen Temperaturen weniger der Speicherwerkstoff als vielmehr die Haltbarkeit der zur Wärmeauskopplung aus dem Speicher verwendeten Stahlrohre. Unlegierte Stähle sind bis max. 400°C "Zeitstandfest". Herkömmliche Edelstähle erreichen bis zu 500°C (Bsp.: 16 MoV 6-3). Diese sogenannte "Zeitstandfestigkeit" kommt zum Tragen, wenn die für den jeweiligen Werkstoff spezifische maximale Einsatztemperatur überschritten wird. Ab dieser Temperatur beginnt sich das Gefüge des Metalls zu verändern. Umso höher die Temperatur, umso schneller finden die Veränderungen statt, d.h. die Zeitstandfestigkeit nimmt ab. In der zweiten Hälfte des 20. Jahrhunderts stiegen die Anforderungen an die Temperaturbeständigkeit von metallischen Werkstoffen kontinuierlich an. Getrieben wurde diese Entwicklung vor allem durch den Kraftwerks-und Turbinenbau, da hier immer höhere Dampftemperaturen und -drücke benötigt wurden, um den Wirkungsgrad der Anlagen weiter zu steigern.

Mit chromlegierten Edelstählen (∼1% Cr), war bei max. 550°C bei einer verträglichen Zeitstandfestigkeit von 100.000h Schluss. Durch eine erhebliche Erhöhung des Chromanteils (∼ 14% Cr) konnte die Temperatur für ferritischmartensitische Stähle auf bis zu 610°C gesteigert werden. Entsprechende austhenitische Stähle erreichen heute 650°C. Temperaturen von 700°C und können mit nickelbasierten Stählen erreicht werden (z.B. Alloy 617). Ein weiterer Ansatz besteht im Einsatz von Sinterwerkstoffen. Hier sind die Forschungen jedoch noch weit weg von einer Serientauglichkeit.

### Technische Aufgabe:

Der Erfindung liegt die Aufgabe zugrunde, einen Wärmespeicher der eingangs genannten Gattung so zu verbessern, dass im Betriebszustand zwischen Wärmespeicher und den darin eingebrachten Rohren zur Führung des Mediums, in flüssiger und/oder dampfförmiger Form, immer ein direkter und inniger Kontakt, ohne Ausbildung eines Spalts, besteht. Ebenso soll der Wärmespeicher und damit auch die Verdampferrohre für hohe Temperaturen geeignet sein.

### Offenbarung der Erfindung sowie deren Vorteile:

Die Lösung der Aufgabe besteht darin, dass die Rohre mit einer metallischen Umhüllung umgeben sind, deren Schmelzpunkt unterhalb der Betriebstemperatur des Wärmespeichers liegt, wobei die Umhüllung sich bei jedem Erhitzen des Wärmespeichers verflüssigt und das verflüssigte oder pastöse Metall der Umhüllung die Luftspalte, welche sich bei Erhitzen zwischen Feststoff und Rohr bilden, mittels Ausbildung einer metallischen Brücke zu schließen sowie die Differenzen auszugleichen imstande ist, welche sich durch unterschiedliche Wärmeausdehnung der eingesetzten Werkstoffe ergeben.

Die Erfindung sieht somit vor, den unvermeidlichen Luftspalt durch Einbringen eines niedrig schmelzenden Metalls - beispielsweise Aluminium mit einem Schmelzpunkt von 660,4°C - zu schließen, welches sich erstmals beim Einbrennen des Wärmespeichers und auch später im Betrieb immer wieder neu verflüssigt und so Spalte oder Ritzen zwischen den Rohren und dem umgebenden Feststoff dauerhaft und vollständig metallisch verschließt und somit wärmetechnisch in idealer Weise überbrückt. Diese vollständige metallische Verbindung zwischen Rohr und Feststoff stellt dauerhaft das Maximum hinsichtlich der übertragbaren Wärme sicher. Da der Feststoff des Wärmespeichers kalt verarbeitet und erst später erhitzt, gesintert oder sogar gebrannt, wird, muss das Metall, welches im erhitzten Zustand des Wärmespeichers die Überbrückung bewerkstelligen soll, ebenfalls in kaltem Zustand eingebracht werden.

Der Wärmespeicher kann unmittelbar zur Erzeugung von oder auch zur Überhitzung von Sattdampf und mittels einer Dampfturbine zur Stromerzeugung verwendet werden. Unter Einsatz eines entsprechenden Wärmetauschers kann er auch zur Erzeugung von warmem Wasser eingesetzt werden.

In einer weiteren Ausgestaltung des patentgemäßen Wärmespeichers ist um den Rohraustritt eines jeden Rohres aus dem Wärmespeicher in den Feststoff eine ringförmige Verbreiterung oder Vertiefung eingebracht, in welche im kalten Zustand ein Vorrat aus dem niedrig schmelzenden Metall der Umhüllung angeordnet ist, welcher bei Erhitzen des Wärmespeichers auf Betriebstemperatur und nach Überschreiten des Schmelzpunktes der Umhüllung eventuelle Fehlmengen in der Ummantelung der Umhüllung der im Wärmespeicher eingebrachten Verdampferrohre auszugleichen im Stande ist.

In einer weiteren Ausgestaltung des patentgemäßen Wärmespeichers ist die die Rohre umgebende Umhüllung in Form einer Umwicklung vorzugsweise aus Draht oder als Spaltband aufgebracht. Auf diese Weise lassen sich die patentgemäß verwendeten Rohre leicht und preiswert herstellen.

Die Rohre innerhalb des Wärmespeichers können vertikal oder in etwa vertikal oder schräg oder auch waagrecht angeordnet sein. Sind die Rohre waagrecht oder in etwa waagrecht innerhalb des Wärmespeichers angeordnet, so kann direkt oberhalb eines jeden Rohres eine Kammer angeordnet sein, welche einen Vorrat des niedrig schmelzenden Metalls, aus welchem die Umhüllung besteht, beherbergt, wobei der Austrittsbereich des Rohrs gegen das Austreten des flüssigen Metalls abgedichtet ist.

In einer weiteren Ausgestaltung des patentgemäßen Wärmespeichers sind zusätzlich an dem Rohr eine oder mehrere metallische Wärmeleitflächen, deren Schmelzpunkt unterhalb der Betriebstemperatur des Wärmespeichers liegt, angeordnet, wodurch die Wärme ausleitende Fläche eines jeden Rohres vergrößert werden kann. Das Metall, aus dem die Wärmeleitflächen bestehen, kann identisch demjenigen Metall sein, welches die Ummantelung bildet.

Nach Erreichen des Schmelzpunktes ergibt sich somit eine formschlüssige, brückenbildende Verbindung mit dem umgebenden Feststoff sowie dem niedrig schmelzenden Metall, welches das Verdampferrohr umgibt einschließlich der Wärmeleitflächen, welche ebenfalls in flüssiger oder pastöser Form vorliegen. Diese formschlüssige Verbindung bleibt auch nach Erstarren des Metalls bei Unterschreitung von dessen Schmelztemperatur erhalten. Aufgrund der Wärmeleitflächen wird die Wärme ausleitende Fläche der Rohre vorteilhaft vergrößert. In einer weiteren, höchst vorteilhaften Ausgestaltung des patentgemäßen Wärmespeichers sind die Rohre doppelwandig aus einem inneren Rohr und einem äußeren Rohr, welches die Umhüllung bildet, zusammengesetzt, wobei das innere Rohr aus temperaturfestem Stahl besteht.

In einer weiteren vorteilhaften Ausgestaltung des patentgemäßen Wärmespeichers ist die Umhüllung ein rohrförmiges Strangpressprofil mit an der Außenseite angeordneten Wärmeleitflächen, welche in den Feststoff ragen, wobei der hohle Kern des Strangpressprofils das innere Rohr aufnimmt, welches das Medium transportiert. Auch in dieser Ausgestaltung wird aufgrund der Wärmeleitflächen die Wärme ausleitende Fläche der Rohre vorteilhaft vergrößert.

In vorteilhafter Weise besteht der Feststoff, aus dem der Wärmespeicher aufgebaut ist, aus Schamottmehl und/oder gemahlenen Ziegelsteinen und/oder zermahlenem Porzellan und/oder Beton und/oder Tonerde und/oder Lavagestein und/oder Stahlkugeln und/oder aus Mischungen der vorgenannten Stoffe.

In einer weiteren vorteilhaften Ausgestaltung des patentgemäßen Wärmespeichers dient als niedrig schmelzendes Metall für die Umhüllung und/oder die Wärmeleitflächen Aluminium oder Lötzinn oder Metalllegierungen mit einem Schmelzpunkt, welcher unterhalb der Betriebstemperatur des Wärmespeichers liegt. Wird derselbe mit einer Betriebstemperatur von 600 Grad C betrieben, so kommt als niedrig schmelzendes Metall Lötzinn oder eine Mischung mit Lötzinn zum Einsatz. Wird der Wärmespeicher hingegen mit einer Betriebstemperatur von cirka 1000GradC oder etwas darunter betrieben, so kommt vorteilhaft Aluminium als niedrig schmelzendes Metall für die Umhüllung zum Einsatz. Unter "Metall" oder "niedrig schmelzendes Metall" der Umhüllung wird in dieser Anmeldung ein solches Metall der Umhüllung verstanden, dessen Schmelzpunkt immer unterhalb der Betriebstemperatur des Wärmespeichers liegt.

In weiterer Ausgestaltung der Erfindung bestehen die Rohre aus einer hochtemperaturfesten Legierung, beispielsweise aus wenigstens einer Nickelbasierten und/oder Nickel-Chrombasierten Stahllegierung, oder aus wenigstens einem Sinterwerkstoff, wobei die Zeitstandfestigkeit der Nickelbasierten Stahllegierung oder des Sinterwerkstoffs über 900 Grad Celsius liegt. Diese Ausgestaltungen besitzen den Vorteil, dass aufgrund der Langzeitstabilität der Werkstoffe für die Verdampferrohre der Wärmespeicher mit hohen Temperaturen dauerhaft gefahren werden kann, weil keine Zerstörung der eingebetteten Verdampferrohre zu befürchten ist.

In weiterer erfinderischer Ausgestaltung des Wärmespeichers können die Rohre innerhalb des Wärmespeichers vertikal angeordnet sein und vertikal beweglich aus dem Wärmespeicher herausfahrbar und wieder einfahrbar gehaltert und in herausgefahrenem Zustand oberhalb des Speicherblocks in einem teilisolierten Bereich angeordnet sind. Die Verdampferrohre werden somit aus der Schmelze des niedrig schmelzenden Metalls herausgezogen und nur zur Wärmeentnahme in die Schmelze abgesenkt. Aufgrund dieser Ausgestaltung der Verdampferrohre in Bezug auf den Wärmespeicher kann die Betriebstemperatur desselben auf >= 1.000°C erhöht werden, weil sichergestellt ist, dass die Verdampferrohre nicht ständig diesen hohen Temperaturen ausgesetzt sind. Werden die Rohre nur über relativ kurze Zeitanteile im Wärmeauskopplungsbetrieb, dazu noch in größeren Zeitabständen entsprechend Wärmeanforderung, so hoch belastet, steigt die effektive Standzeit der Rohre drastisch an. Selbst wenn ein solches Rohr z.B. nominal eine Zeitstandfestigkeit von nur 10.000h bei 900°C aufweist, so sind 10.000h reiner Wärmeauskopplungsbetrieb eine sehr lange Zeit.

Um das zu gewährleisten, sind die Verdampferrohre somit vertikal beweglich gestaltet. Solange keine Wärme aus dem Speicher ausgekoppelt wird, befinden sich die Rohre im ausgefahrenen Zustand oberhalb des Speicherblocks in einem teilisolierten Bereich. Durch die darunterliegende innere Isolierung des Wärmespeicherblocks werden sich dort nicht mehr als 200-300°C einstellen. Diese Dauertemperatur ist völlig unkritisch für die eingesetzten Rohre, welche in diesem Fall normale Stahlrohre sein können, welche eine Zeitstandfestigkeit auch unterhalb von 900°C bis 1000°C aufweisen können.

Erst wenn Energie dem Speicher entnommen werden soll, werden die Rohre in den Speicherblock eingefahren, was mit gutem Wirkungsgrad und verschleißfrei durchgeführt werden kann. Die einfahrenden Rohre tauchen in die Schmelze des niedrig schmelzenden Metalls ein, wodurch die Schmelze durch das Rohr verdrängt wird und an der Rohrwandung nach oben steigt. Dadurch wird immer wieder die optimale Verbindung hinsichtlich der Wärmeübertragung hergestellt. Die Verdampferrohre sind vorteilhaft nur genau so lange der schädlich hohen Übertemperatur ausgesetzt, wie Wärme entnommen werden soll. Danach werden sie zurück in die Ausgangsposition gefahren, wo sie wieder abkühlen und solange keiner weiteren temperaturbedingten Alterung unterliegen, bis sie zur Wärmeentnahme wieder eingefahren werden. Da in der Praxis die Summe aus Lade- und reinen Speicherzeiten ein Vielfaches der Wärmeauskopplungszeiten ausmachen wird, kann somit ein Wärmespeicher mit sehr langer Standzeit gebaut werden.

Die Aufgabe wird des Weiteren durch ein Verfahren zur Wärmespeicherung unter Verwendung eines Wärmespeichers mit einer Einspeiseeinrichtung für die zu speichernde Energie in Form von Wärme gelöst, bestehend aus einem hitzebeständigen Feststoff, welcher bei Erhitzen Wärme speichert, zur Erzielung einer langzeitstabilen und gleichmäßigen Leistungsabgabe, wobei zur Wärmeentnahme in den Feststoff Rohre eingebettet sind, welche zum Erhitzen und oder Verdampfen eines die Rohre beaufschlagendes, Wärme transportierendes Medium dienen. Patentgemäß werden die Rohre mit einer metallischen Umhüllung umgeben, deren Schmelzpunkt unterhalb der Betriebstemperatur des Wärmespeichers liegt, und anschließend werden die Rohre in kaltem Zustand des Wärmespeichers in den Feststoff eingebaut, wonach sich beim Betrieb des Wärmespeichers bei jedem Erhitzen desselben die Umhüllung verflüssigt und das verflüssigte oder pastöse Metall der Umhüllung die Luftspalte und Risse, welche sich beim Erhitzen zwischen Feststoff und Rohr bilden, mittels Ausbildung einer flüssigen metallischen Brücke schließt sowie die Differenzen ausgleicht, welche sich durch unterschiedliche Wärmeausdehnung der eingesetzten Werkstoffe ergeben. Zusätzlich können die Rohre vertikal verfahren werden.

Es sind verschiedene Ausführungen und Methoden vorgesehen, das Metall mit dem niedrigen Schmelzpunkt, welches die Rohre umgibt, in den Wärmespeicher einzubringen.
i. Die einzubringenden Rohre oder Verdampferrohre, welche optional mit Lamellen zur weiteren Leistungserhöhung metallisch verbunden sind, werden eng anliegend mit Draht oder Band aus dem niedrig schmelzenden Metall umwickelt. Am oberen Ende des einzubringenden Rohres befindet sich innerhalb des Wärmespeichers ein ringförmiges Reservoir, in das bei der Herstellung vor der ersten Inbetriebnahme ein Ring aus dem niedrig schmelzenden Metall eingelegt wird. Sobald der Speicher erstmals über den Schmelzpunkt des niedrig schmelzenden Metalls erhitzt wird, schließen sich die vorhandenen Spalten durch das verflüssigte Metall. Aus dem oben angebrachten Reservoir kann im Bedarfsfall flüssiges Metall nach unten nachfließen, so dass auch größere Spalten überbrückt werden können. Diese Lösung hat zudem den Vorteil, dass die für die Wärmeübertragung nutzbare Oberfläche des Feststoffs, der die Rohre umgibt, durch die bei der Einbettung des Rohres in den Feststoff entstehende Negativkontur des Drahtes erheblich vergrößert wird.
ii. Die einzubringenden Rohre, welche optional mit Lamellen zur weiteren Leistungserhöhung metallisch verbunden sind, werden vollständig mit dem niedrig schmelzenden Metall ummantelt. Das kann z.B. in Tauchbädern erfolgen, in die die vorgefertigten kalten, evtl. auch zusätzlich gekühlten, Rohre eingetaucht werden, wodurch sich ein metallischer Überzug mit dem niedrig schmelzenden Metall ergibt. Im oberen Bereich kann wiederum ein Reservoir vorgesehen werden, aus dem flüssiges Metall nach unten nachfließen kann.
iii. Sofern keine Stahl-Lamellen an den Verdampferrohren angebracht werden, kann ein Rohr-in-Rohr-System eingesetzt werden. Hierbei wird über das Verdampferrohr ein zweites Rohr, bestehend aus dem niedrig schmelzenden Metall geschoben und beide zusammen bei der Herstellung des Wärmespeichers in den Feststoff eingebettet. Auch hier kann wiederum im oberen Bereich des Endes des Rohres ein Reservoir für das niedrig schmelzende Metall vorgesehen werden.
iiii. Zur weiteren Leistungsverbesserung kann anstelle des Drahtes oder des äußeren Rohres auch ein Strangpressprofil aus einem niedrig schmelzenden Metall eingesetzt werden, welches im Kern eine Röhre darstellt, in die das Rohr eingeschoben wird. An der Außenseite befinden sich dagegen eine oder mehrere Wärmeleitflächen, die der Oberflächenvergrößerung zur Verbesserung der Wärmeausleitung aus dem Feststoff in das die Wärme transportierende Medium dienen. Auch hier kann am oberen Ende des Rohres bzw. des Strangpressprofils ein Vorratsbehälter für den niedrig schmelzenden Werkstoff vorgesehen werden.

Die das Wärmemedium transportierenden und in den Feststoff eingebetteten Rohre bestehen vorzugsweise aus temperaturfestem Stahl entsprechend der gewählten Betriebstemperatur des Wärmespeichers.

### Kurzbezeichnung der Zeichnung, in der zeigen:

- Figur 1: eine vergrößerte Darstellung eines Ausschnitts eines Rohres nach dem Einbringen desselben in einen Wärmespeicher vor dem ersten Erhitzen desselben
- Figur 2: eine vergrößerte Darstellung des Ausschnitts des Rohres gemäß Figur 1 nach dem ersten Erhitzen des Wärmespeichers
- Figur 3: eine Schnittansicht durch einen Wärmespeicher zur Darstellung der darin verlaufenden Rohre und deren metallischen Umhüllung
- Figur 4: einen Schnitt längs der Linie A-A in Figur 3 in erhitztem Zustand des Wärmespeichers
- Figur 5: eine perspektivische Darstellung des Wärmespeichers der Figur 1 zur Darstellung von vier Rohren mit metallischer Umhüllung
- Figur 6: eine Draufsicht von oben auf Figur 5
- Figur 7: eine weitere Schnittansicht durch einen Wärmespeicher zur Darstellung der Rohre und deren metallische Umhüllung, welche aus einem rohrförmiges Strangpressprofil mit an der Außenseite angeordneten Wärmeleitflächen besteht, welche in den Feststoff ragen, wobei der hohle Kern des Strangpressprofils das innere Rohr aufnimmt, welches das Medium transportiert
- Figur 8: einen Schnitt längs der Linie C-C in Figur 7 in erhitztem Zustand des Wärmespeichers
- Figur 9: eine Draufsicht auf Figur 7 und
- Figur 10: einen Schnitt längs der Linie B-B in Figur 7 in erhitztem Zustand des Wärmespeichers.

### Wege zur Ausführung der Erfindung:

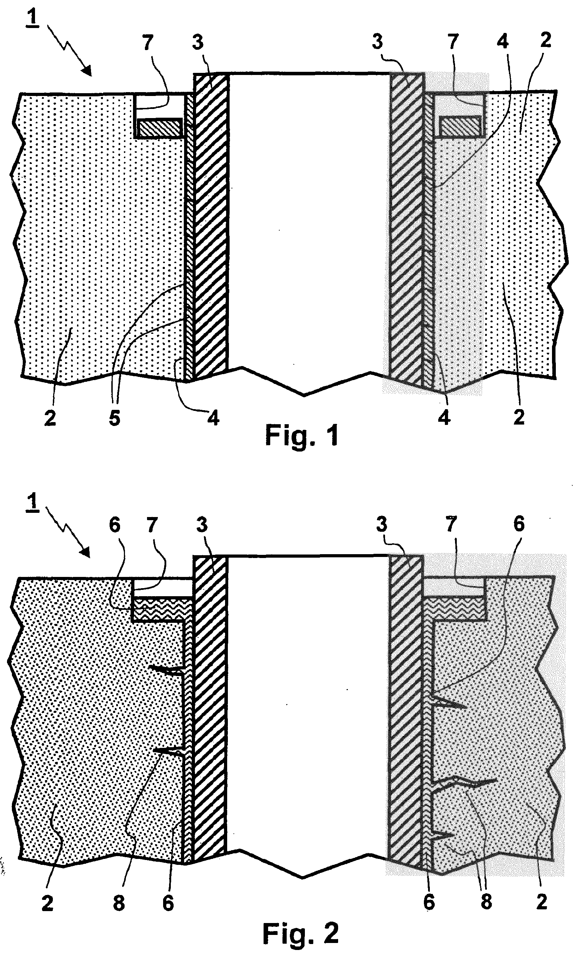

Die Figuren 1 und 2 zeigen je eine vergrößerte Darstellung eines Ausschnitts eines Rohres 3 innerhalb eines Wärmespeichers 1, welcher aus einem Feststoff 2 besteht, wie zum Beispiel Schamottmehl und/oder gemahlenen Ziegelsteinen und/oder und/oder Beton o.ä. Das Rohr 3 in Figur 1 ist mittels eines metallischen Bandes umwickelt, welches dadurch eine Umhüllung 4 für das Rohr 3 bildet. In diesem Zustand werden die Rohre 3 mitsamt der Umhüllung 4 beim Bau des Wärmespeichers 1 in den Feststoff 2 desselben eingebaut; beispielsweise wird nach der Anordnung der Rohre 3 im Wärmespeicher 1 derselbe mit Beton als Feststoff ausgegossen, so dass die Rohre 3 mitsamt ihrer Umhüllung 4 innerhalb des Feststoffes 2 fest gehaltert sind. Das die Umhüllung bildende Metall besitzt einen niedrigeren Schmelzpunkt als die Betriebstemperatur des Wärmespeichers.

In Figur 2 ist der Zustand des Rohres 3 nach dem ersten oder auch mehrmaligen Erhitzen des Wärmespeichers auf seine Betriebstemperatur gezeigt. Die Umhüllung ist aufgrund der Erhitzung geschmolzen und bildet eine Flüssigkeitssäule 6 aus geschmolzenem Metall, welche das Rohr 3 vollständig umgibt und zum Feststoff 2 eine flüssige, metallische Brücke sehr hoher Wärmeleitfähigkeit bildet und dort in durch die Erhitzung innerhalb des Feststoffes 2 ausgebildete Spalte 8 oder Risse eingedrungen ist.

Die Rohre 3 sind entsprechend der WO2008135100A1 Verdampferrohre und dienen dazu, dass beim Durchleiten oder Einleiten eines flüssigen Mediums, wie Wasser, dieses verdampft und der Dampf aus dem Wärmespeicher 1 ausgeleitet wird, wonach dem Dampf in bekannter Weise seine Wärmeenergie entzogen werden kann.

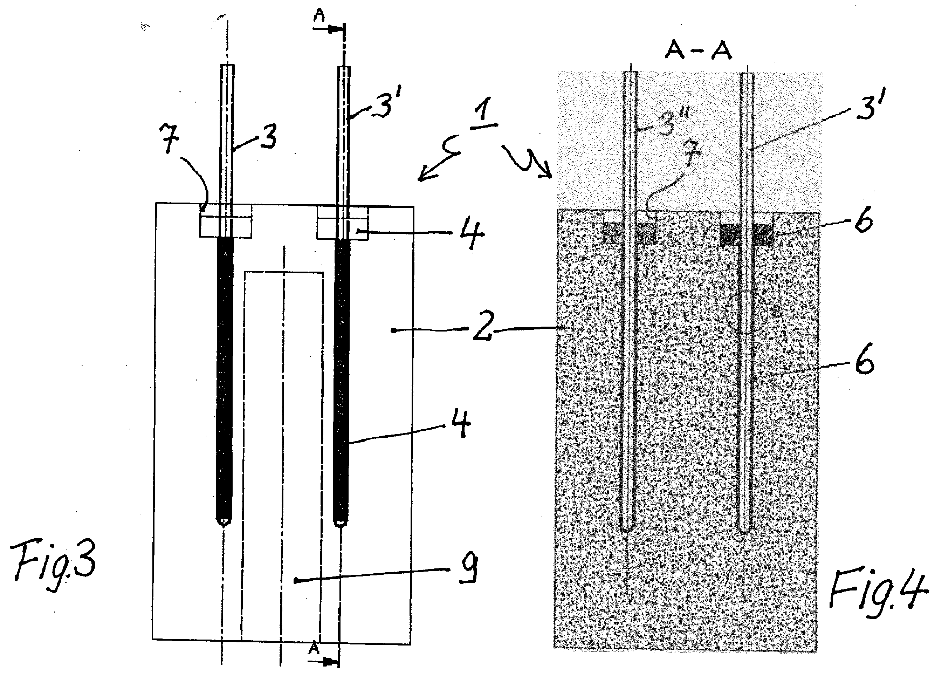

Mit der Bezugsziffer 7 ist eine torusförmige, zylindrische Vertiefung als Reservoir bezeichnet, in dem sich in zusätzlicher Ausgestaltung dasjenige Metall befindet, welches die Umhüllung 4 bildet. Sollte bei der Erhitzung des Wärmespeichers 1 aufgrund größerer Risse 8 oder Luftspalten flüssiges Metall fehlen, so kann dieses aus dem Reservoir 7 in geschmolzenem Zustand nach unten nachfließen. Die Figuren 3 und 4 zeigen zwei unterschiedliche Ansichten des aus dem Feststoff 2 bestehenden Wärmespeichers 1 mit den darin enthaltenen Rohren 3, 3' und 3" gemäß der Figur 1. In Figur 3 ist die Ummantelung 4 als feste Ummantelung angedeutet; in der Figur 4 ist durch den punktierten Feststoff 2 angedeutet, dass dieser auf seine Betriebstemperatur erhitzt ist, so dass die Ummantelung nunmehr eine Säule 6 aus geschmolzenem Metall bildet. Innerhalb des Wärmespeichers 9 ist eine Einspeiseeinrichtung 9 vorgesehen, welche für die Zuführung der zu speichernden Energie in Form von Wärme in den Wärmespeicher dient.

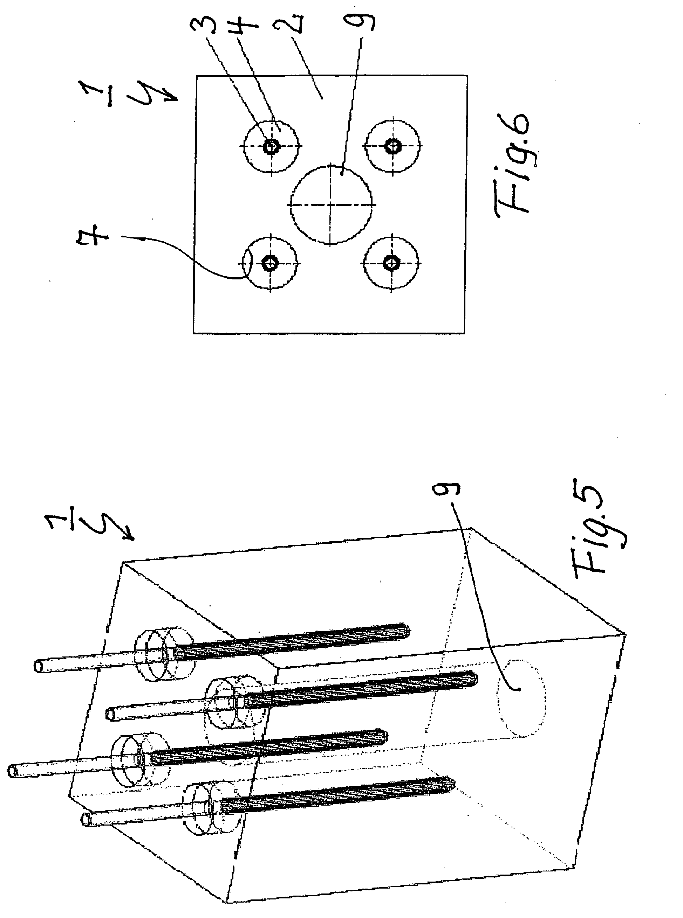

Figur 5 zeigt eine perspektivische Ansicht des Wärmespeichers 1 der Figuren 3 und 4; Figur 6 zeigt eine Draufsicht von oben auf den Wärmespeicher 1 der Figur 5, wobei wiederum die Einspeiseeinrichtung 9 für die Zuführung der zu speichernden Energie in Form von Wärme innerhalb des Wärmespeichers in nur schematischer Weise dargestellt ist.

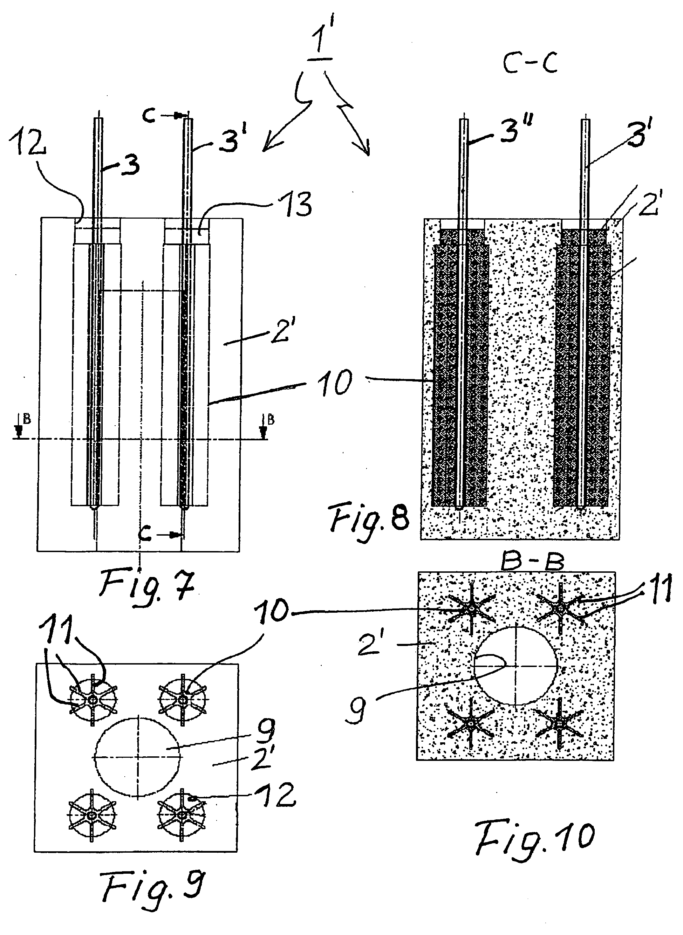

Die Figuren 7 - 10 zeigen ein weiteres Beispiel eines Wärmespeichers 1' in verschiedenen Ansichten. Figur 7 enthält eine weitere Schnittansicht durch einen Wärmespeicher 1' zur Darstellung der Rohre 3 und deren metallische Umhüllung, welche aus einem rohrförmiges Strangpressprofil 10 mit sechs an der Außenseite des Kerns sternförmig angeordneten Wärmeleitflächen 11 besteht, welche in den Feststoff 2' des Wärmespeichers 1' ragen und in den Feststoff 2' eingebettet sind. Der innere hohle Kern des Strangpressprofils 10 nimmt das innere Rohr 3 auf, welches ein hitzebeständiges Stahlrohr ist und welches das Medium für die Wärmeentnahme transportiert.

Figur 8 zeigt einen Schnitt längs der Linie C-C in Figur 7, wobei hier durch die Punktierung des Feststoffes 2' der erhitzte Zustand des Wärmespeichers angedeutet sein soll, wobei auch das Strangpressprofil 10 mit seinen Wärmeleitflächen 11 in flüssigem Zustand innerhalb des Feststoffes 2 vorliegt.

Die Figur 9 zeigt eine Draufsicht auf Figur 7; die Figur 10 zeigt einen Schnitt längs der Linie B-B in Figur 7, wobei hier ebenfalls durch die Punktierung des Feststoffes 2' der erhitzte Zustand des Wärmespeichers 2' einschließlich des flüssigen Zustands des Strangpressprofils 10 mit den sechs Wärmeleitflächen 11 angedeutet sein soll.

Mit der Bezugsziffer 12 ist eine torusförmige, zylindrische Vertiefung als Reservoir bezeichnet, in welchem sich in zusätzlicher Ausgestaltung dasjenige Metall 13 befindet, welches die Umhüllung 10 für die Rohre 3, 3', 3" bildet. Mit der Bezugsziffer 9 ist wiederum die Einspeiseeinrichtung für die Zuführung der zu speichernden Energie in Form von Wärme innerhalb des Wärmespeichers 2' in schematischer Weise dargestellt.

### Gewerbliche Anwendbarkeit:

Der Gegenstand der Erfindung ist in der Technik der Wärmespeicherung gewerblich anwendbar. Derartige Speicher sind insbesondere zur Speicherung von "schmutziger Energie" geeignet.

## Patentansprüche

1. Wärmespeicher mit einer Einspeiseeinrichtung für die zu speichernde Energie in Form von Wärme, zur langzeitstabilen und gleichmäßigen Leistungsabgabe der Wärme, bestehend aus einem hitzebeständigen Feststoff (2,2'), welcher bei Erhitzen Wärme zu speichern imstande ist, wobei zur Wärmeentnahme in den Feststoff (2,2') Rohre (3,3',3") eingebettet sind, welche zum Erhitzen und/oder Verdampfen eines die Rohre (3,3',3") beaufschlagendes, Wärme transportierendes Medium dienen,
**dadurch gekennzeichnet,**
**dass** die Rohre (3,3',3") mit einer metallischen Umhüllung (4,5,10) umgeben sind, deren Schmelzpunkt unterhalb der Betriebstemperatur des Wärmespeichers (1,1') liegt, wobei die Umhüllung (4,5,10) sich bei jedem Erhitzen des Wärmespeichers (1,1') verflüssigt und das verflüssigte oder pastöse Metall der Umhüllung (4,5,10) die Luftspalte (8), welche sich bei Erhitzen zwischen Feststoff (2,2') und Rohr (3,3',3") bilden, mittels Ausbildung einer metallischen Brücke zu schließen sowie die Differenzen auszugleichen imstande ist, welche sich durch unterschiedliche Wärmeausdehnung der eingesetzten Werkstoffe ergeben.

2. Wärmespeicher nach Anspruch 1, **dadurch gekennzeichnet,**
**dass** um den Rohraustritt eines jeden Rohres (3,3',3") aus dem Wärmespeicher (1,1') in den Feststoff (2,2') eine ringförmige Verbreiterung oder Vertiefung (7,12) eingebracht ist, in welche im kalten Zustand ein Vorrat aus dem niedrig schmelzenden Metall der Umhüllung (4,5,10) angeordnet ist, welcher bei Erhitzen des Wärmespeichers (1,1') auf Betriebstemperatur und nach Überschreiten des Schmelzpunktes der Umhüllung (4,5,10) eventuelle Fehlmengen in der Ummantelung der Umhüllung (4,5,10) der im Wärmespeicher (1,1') eingebrachten Verdampferrohre (3,3',3") auszugleichen im Stande ist.

3. Wärmespeicher nach einem der vorherigen Ansprüche,
**dadurch gekennzeichnet, dass** die die Rohre (3,3',3") umgebende Umhüllung in Form einer Umwicklung aus Draht oder als Spaltband (5) aufgebracht ist.

4. Wärmespeicher nach einem der vorherigen Ansprüche,
**dadurch gekennzeichnet, dass** zusätzlich an dem Rohr (3,3',3") eine oder mehrere metallische Wärmeleitflächen (11), deren Schmelzpunkt unterhalb der Betriebstemperatur des Wärmespeichers (2') liegt, angeordnet sind, wodurch die Wärme ausleitende Fläche eines jeden Rohres (3,3',3") vergrößert ist.

5. Wärmespeicher nach einem der vorherigen Ansprüche,
**dadurch gekennzeichnet, dass** die Rohre (3,3',3") doppelwandig aus einem inneren Rohr (3,3',3") und einem äußeren Rohr, welches die Umhüllung (10) bildet, zusammengesetzt sind, wobei wenigstens das innere Rohr (3,3',3") aus temperaturfestem Stahl besteht.

6. Wärmespeicher nach Anspruch 5, **dadurch gekennzeichnet,**
**dass** die Umhüllung ein rohrförmiges Strangpressprofil (10) mit an der Außenseite des Kerns angeordneten Wärmeleitflächen (11) ist, welche in den Feststoff (2') ragen, wobei der hohle Kern des Strangpressprofils (10) das innere Rohr (3,3',3") aufnimmt, welches das Medium transportiert.

7. Wärmespeicher nach Anspruch 1, **dadurch gekennzeichnet,**
**dass** die Rohre waagrecht oder in etwa waagrecht innerhalb des Wärmespeichers verlaufen, wobei ein Vorrat des niedrig schmelzenden Metalls in einer Kammer innerhalb des Wärmespeicher oberhalb eines jeden Rohres in den Feststoff eingebettet ist und der Austrittsbereich des Rohrs gegen das Austreten des flüssigen Metalls abgedichtet ist.

8. Wärmespeicher nach einem der vorherigen Ansprüche,
**dadurch gekennzeichnet, dass** die Rohre (3,3',3") aus einer hochtemperaturfesten Legierung, beispielsweise aus wenigstens einer Nickelbasierten Stahllegierung, oder aus wenigstens einem Sinterwerkstoff bestehen, wobei die Zeitstandfestigkeit der Nickelbasierten Stahllegierung oder des Sinterwerkstoffs über 900 Grad Celsius liegt.

9. Wärmespeicher nach einem der vorherigen Ansprüche,
**dadurch gekennzeichnet, dass** die Rohre (3,3',3") innerhalb des Wärmespeichers vertikal angeordnet sind und vertikal beweglich aus dem Wärmespeicher und aus der Schmelze des niedrig schmelzenden Metalls herausfahrbar und wieder in die Schmelze des niedrig schmelzenden Metalls eintauchbar gehaltert sind, wobei die Rohre in herausgefahrenem Zustand oberhalb des Speicherblocks in einem teilisolierten Bereich angeordnet sind.

10. Wärmespeicher nach einem der vorherigen Ansprüche,
**dadurch gekennzeichnet, dass** der Feststoff (2,2'), aus dem der Wärmespeicher (1,1') aufgebaut ist, aus Schamottmehl und/oder gemahlenen Ziegelsteinen und/oder zermahlenem Porzellan und/oder Beton und/oder Tonerde und/oder Lavagestein und/oder Stahlkugeln und/oder aus Mischungen der vorgenannten Stoffe besteht.

11. Verfahren zur Wärmespeicherung unter Verwendung eines Wärmespeichers mit einer Einspeiseeinrichtung für die zu speichernde Energie in Form von Wärme, bestehend aus einem hitzebeständigen Feststoff (2,2'), welcher bei Erhitzen Wärme speichert, zur Erzielung einer langzeitstabilen und gleichmäßigen Leistungsabgabe, wobei zur Wärmeentnahme in den Feststoff (2,2') Rohre (3,3',3") eingebettet sind, welche zum Erhitzen und oder Verdampfen eines die Rohre beaufschlagendes, Wärme transportierendes Medium dienen, **dadurch gekennzeichnet,**
**dass** die Rohre (3,3',3") mit einer metallischen Umhüllung (4,5,10) umgeben werden, deren Schmelzpunkt unterhalb der Betriebstemperatur des Wärmespeichers liegt, und anschließend die Rohre (3,3',3") in kaltem Zustand des Wärmespeichers (1,1') in den Feststoff (2,2') eingebaut werden, wonach sich beim Betrieb des Wärmespeichers bei jedem Erhitzen desselben die Umhüllung (4,5,10) verflüssigt und das verflüssigte oder pastöse Metall der Umhüllung (4,5,10) die Luftspalte (8) und Risse, welche sich beim Erhitzen zwischen Feststoff und Rohr (3,3',3") bilden, mittels Ausbildung einer flüssigen metallischen Brücke schließt sowie die Differenzen ausgleicht, welche sich durch unterschiedliche Wärmeausdehnung der eingesetzten Werkstoffe ergeben.

12. Verfahren nach Anspruch 11, **dadurch gekennzeichnet,**
**dass** die Rohre (3,3',3") vertikal verfahren werden können und nur zur Wärmeentnahme in den Wärmespeicher eintauchen.

## Claims

1. Heat accumulator with a supply device for the energy to be accumulated in the form of heat, for the long term-stable and uniform capacity output of heat, comprised of refractory bulk matter (2, 2') which, upon heating, has the capability of accumulating heat, wherein for the heat-withdrawal tubes (3, 3', 3") are embedded into the bulk matter (2, 2') which serve for heating and/or vaporizing a medium acting upon the tubes (3, 3', 3") and transporting heat,
**characterized in that**
the tubes (3, 3', 3") are circumjacent with a metal cladding (4, 5, 10) whose melting point is below the operating temperature of the heat accumulator (1, 1'), wherein the cladding (4, 5, 10) liquefies with each heating of the heat accumulator (1, 1') and the liquefied or paste-like metal of the cladding (4, 5, 10) closes the air gaps (8), that form during the heating between bulk matter (2, 2') and tube (3, 3', 3"), by being capable of developing a metal bridge as well as of compensating the differences resulting through the varied thermal expansions of the materials utilized.

2. Heat accumulator as in claim 1, **characterized in that** about the tube outlet of each tube (3, 3', 3") from the heat accumulator (1, 1') an annular widening or recess (7, 12) is worked into the bulk matter (2, 2') in which, in the cold state, a reserve of the low melting metal of the cladding (4, 5, 10) is disposed which, during the heating of the heat accumulator (1, 1') to operating temperature and after exceeding the melting point of the cladding (4, 5, 10), is capable of compensating deficits in the jacket or cleading of the cladding (4, 5, 10) of the vaporization tubes (3, 3', 3") introduced into the heat accumulator (1,1').

3. Heat accumulator as in one of the preceding claims, **characterized in that** the cladding circumjacent to the tubes (3, 3', 3") is applied in the form of winding turns comprised of wire or as a split strip (5).

4. Heat accumulator as in one of the preceding claims, **characterized in that**, on the tube (3, 3', 3") one or several thermally conductive metal faces (11) are additionally disposed whose melting point is below the operating temperature of the heat accumulator (2'), whereby the area conducting heat out of each tube (3, 3', 3") is increased.

5. Heat accumulator as in one of the preceding claims, **characterized in that** the tubes (3, 3', 3") are double walled composed of an inner tube (3, 3', 3") and an outer tube which forms the cladding (10), wherein at least the inner tube (3, 3', 3") is comprised of a temperature resistant steel.

6. Heat accumulator as in claim 5, **characterized in that** the cladding is a tubular extruded section (10) with thermally conductive aces (11) disposed on the outside of its core, which project into the bulk matter (2') wherein the hollow core of the extruded section (10) receives the inner tube (3, 3', 3") that transports the medium.

7. Heat accumulator as in claim 1, **characterized in that** the tubes extend horizontally or approximately horizontally within the heat accumulator, wherein a reserve of the low melting metal is embedded into the bulk matter in a chamber within the heat accumulator above each tube, and the emergence region of the tube is sealed against the leakage of the liquid metal.

8. Heat accumulator as in one of the preceding claims, **characterized in that** the tubes (3, 3', 3") are comprised of a high-temperature resistant alloy, for example of at least one nickel-based steel alloy, or of at least one sintered material, wherein the endurance fatigue of the nickel-based steel alloy or of the sintered material lies above 900 degrees Celsius.

9. Heat accumulator as in one of the preceding claims, **characterized in that** the tubes (3, 3', 3") are disposed vertically within the heat accumulator and are mounted such that by being moved vertically they can be moved out of the heat accumulator and out of the melt of the low-melting metal and also be immersed again into the melt of the low melting metal, wherein the tubes in the retracted state are disposed in a partially insulated region above the storage block.

10. Heat accumulator as in one of the preceding claims, **characterized in that** the bulk matter (2, 2'), of which is constructed the heat accumulator (1, 1'), is comprised of fire-clay powder and/or ground clay bricks and/or ground porcelain, and/or concrete and/or ball clay and/or lava rock and/or steel-balls, and/or mixtures of the listed materials.

11. Method for heat storage using a heat accumulator with a supply device for the energy to be accumulated in the form of heat, comprised of refractory bulk matter (2, 2') which, upon heating, accumulates heat to achieve a long term-stable and uniform capacity output, wherein for the heat-withdrawal, tubes (3, 3', 3") are embedded into the bulk matter (2, 2') which serve for heating and/or vaporizing a medium acting upon the tubes (3, 3', 3") and transporting heat, **characterized in that**
the tubes (3, 3', 3") are circumjacent with a metal cladding (4, 5, 10) whose melting point is below the operating temperature of the heat accumulator and, subsequently, in the cold state of the heat accumulator (1, 1'), the tubes (3, 3', 3") are installed into the bulk matter (2, 2'), whereupon during operation of the heat accumulator with each heating of the same the cladding (4, 5, 10) liquefies and the liquefied or past-like metal closes the air gaps (8) and fractures, which form during the heating between the bulk matter and tube (3, 3', 3"), by way of developing a liquid metal bridge and compensates the differences resulting due to the varied thermal expansions of the utilized materials.

12. Method as in claim 11, **characterized in that**
the tubes (3, 3', 3") can be moved vertically and are only immersed into the heat accumulator for the withdrawal of heat.

## Revendications

1. Accumulateur thermique doté d'un dispositif d'alimentation pour l'énergie à stocker sous forme de chaleur permettant une mise à disposition de puissance thermique constante et stable dans le temps, comprenant une matière solide résistant à la chaleur (2,2') et capable de stocker la chaleur lors du chauffage, dans laquelle matière solide (2,2') sont incorporés des tubes (3,3',3") servant au chauffage et/ou à l'évaporation d'un fluide qui parcourt les tubes (3,3',3") en transportant la chaleur,
**caractérisé en ce que**
les tubes (3,3',3") sont entourés d'une gaine métallique (4,5,10) dont le point de fusion est inférieur à la température de service de l'accumulateur thermique (1,1'), ladite gaine (4,5,10) se liquéfiant à chaque chauffage de l'accumulateur thermique (1,1') et le métal liquéfié ou pâteux de la gaine (4,5,10) étant capable de former un pont métallique remplissant les interstices d'air (8) qui se forment entre la matière solide (2,2') et le tube (3,3',3") lors du chauffage, et de compenser les différences résultant de la dilatation thermique différente des matériaux utilisés.

2. Accumulateur thermique selon la revendication 1,
**caractérisé en ce qu'**autour de la sortie de chaque tube (3,3',3") de l'accumulateur thermique (1,1'), la matière solide (2,2') est pourvue d'un élargissement ou d'une cavité annulaire (7,12) dans laquelle, à l'état froid, est disposée une réserve du métal à bas point de fusion de la gaine (4,5,10), laquelle, lors du chauffage de l'accumulateur thermique (1,1') à la température de service et après le dépassement du point de fusion de la gaine (4,5,10), est capable de compenser les quantités éventuellement manquantes dans l'enveloppe de la gaine (4,5,10) des tubes d'évaporation (3,3',3") incorporés dans l'accumulateur thermique (1,1').

3. Accumulateur thermique selon l'une des revendications précédentes,
**caractérisé en ce que** la gaine entourant les tubes (3,3',3") est appliquée sous forme d'enroulement de fil ou en tant que bande refendue (5).

4. Accumulateur thermique selon l'une des revendications précédentes,
**caractérisé en ce que** le tube (3,3',3") est doté en outre d'une ou de plusieurs surfaces métalliques conductrices de chaleur (11) dont le point de fusion est inférieur à la température de service de l'accumulateur thermique (2'), agrandissant ainsi la surface conductrice de chaleur de chacun des tubes (3,3',3").

5. Accumulateur thermique selon l'une des revendications précédentes,
**caractérisé en ce que** les tubes (3,3'3") sont à double paroi et composés d'un tube intérieur (3,3',3") et d'un tube extérieur formant la gaine (10), et qu'au moins le tube intérieur (3,3',3") est réalisé en acier résistant aux hautes températures.

6. Accumulateur thermique selon la revendication 5,
**caractérisé en ce que** la gaine est un profilé tubulaire extrudé (10) présentant des surfaces conductrices de chaleur (11) disposées sur la face extérieure du noyau et pénétrant dans la matière solide (2'), le noyau creux du profilé extrudé (10) recevant le tube intérieur (3,3',3") qui transporte le fluide.

7. Accumulateur thermique selon la revendication 5,
**caractérisé en ce que** les tubes s'étendent horizontalement ou à peu près horizontalement à l'intérieur de l'accumulateur thermique, la réserve du métal à bas point de fusion étant incorporée dans la matière solide dans une chambre à l'intérieur de l'accumulateur thermique au-dessus de chacun des tubes, et la zone de sortie du tube étant rendue étanche contre la fuite de métal liquéfié.

8. Accumulateur thermique selon l'une des revendications précédentes,
**caractérisé en ce que** les tubes (3,3'3") sont constitués d'un alliage résistant aux hautes températures, par exemple d'au moins un alliage d'acier à base nickel, ou d'au moins un matériau fritté, la résistance au fluage de l'alliage d'acier à base nickel ou du matériau fritté étant supérieure à 900 °C.

9. Accumulateur thermique selon l'une des revendications précédentes,
**caractérisé en ce que** les tubes (3,3',3") à l'intérieur de l'accumulateur thermique sont disposés verticalement et peuvent être retirés verticalement de l'accumulateur thermique et de la masse fondue du métal à bas point de fusion et peuvent être immergés à nouveau dans la masse fondu de métal à bas point de fusion, les tubes, en position retirée, étant disposés au-dessus du bloc de stockage dans une zone partiellement isolée.

10. Accumulateur thermique selon l'une des revendications précédentes,
**caractérisé en ce que** la matière solide (2,2') dont est constitué l'accumulateur thermique (1,1'), est composé de farine de chamotte et/ou de briques broyées et/ou de porcelaine broyée et/ou de béton et/ou d'alumine et/ou de pierre de lave et/ou de billes d'acier et/ou de mélanges de ces matériaux.

11. Procédé d'accumulation de chaleur utilisant un accumulateur thermique doté d'un dispositif d'alimentation pour l'énergie à stocker sous forme de chaleur et comprenant une matière solide résistant à la chaleur (2,2') capable de stocker la chaleur lors du chauffage pour assurer une mise à disposition de puissance thermique constante et stable dans le temps, dans lequel, aux fins du prélèvement de la chaleur, des tubes (3,3',3") sont incorporés dans la matière solide (2,2') servant au chauffage et/ou à l'évaporation d'un fluide qui parcourt les tubes (3,3',3") en transportant la chaleur,
**caractérisé en ce que**
les tubes (3,3',3") sont entourés d'une gaine métallique (4,5,10) dont le point de fusion est inférieur à la température de service de l'accumulateur thermique (1,1'), et que, ensuite, les tubes (3,3',3") sont incorporés dans la matière solide (2'2') de l'accumulateur thermique (1,1') à l'état froid, après quoi la gaine (4,5,10) se liquéfie à chaque chauffage de l'accumulateur thermique (1,1') et le métal liquéfié ou pâteux de la gaine (4,5,10) forme un pont métallique liquide qui remplit les interstices d'air (8) et fissures qui se forment entre la matière solide et le tube (3,3',3") lors du chauffage, et compense les différences résultant de la dilatation thermique différente des matériaux utilisés.

12. Procédé selon la revendication 1,
**caractérisé en ce que** les tubes (3,3',3") peuvent être déplacés dans le sens vertical et ne sont immergés dans l'accumulateur thermique que pour le prélèvement de la chaleur.
